# EUROPEAN PATENT APPLICATION

(11) **EP 1 206 999 A2**
(43) Date of publication of application: **22.05.2002**
(21) Application number: 01108889.5
(22) Date of filing: 10.04.2001
(51) Int. Cl.: B23K 26/08

(54) **Laser cutting torch**

(30) Priority: 11.04.2000 JP 2000108942
(71) Applicant: KOIKE SANSO KOGYO CO., LTD, Edogawa-ku, Tokyo (JP)
(72) Inventor: Maruyma, Yoichi, Edogawa-ku, Tokyo (JP); Furujo, Akira, Edogawa-ku, Tokyo (JP)
(74) Representative: Patentanwälte Westphal, Mussgnug & Partner

(57) **Abstract**

The choices of lenses could be broadened when using lenses of different focus distance and a reduction of size could be accomplished and thus an operation could be made easier by providing a laser-cutting torch in which the laser-cutting torch receives a laser light emitted from a laser oscillator and irradiates the laser light through a nozzle for cutting a targeted cut material.

A laser-cutting torch A having: a revolving movable structure with a primary optical axis la as a center in which the primary optical axis 1a is vertical to the targeted cut material B, a parallel secondary optical axis 2a and a fourth optical axis 4a arranged in a horizontal direction perpendicularly intersecting with the primary optical axis 1a in which the secondary optical axis 2a and the fourth optical axis 4a serves as a center for pivotal movement; a primary reflection mirror 7 for receiving a laser light; a plurality of reflection mirrors 9,10; a secondary reflection mirror 8 arranged facing a nozzle 6; wherein the laser-cutting torch is structured to set an angle of the nozzle 6, and to set an arrangement of an intersecting point between the primary optical axis 1a and the targeted cut material B in which the primary optical axis 1a is perpendicular to a laser light irradiated from the nozzle 6 or to set an arrangement displaced to a prescribed length apart from the intersecting portion during the pivotal movement of the optical axes 2a and 4a; wherein the primary reflection mirror 7 and the secondary reflection mirror 8 have a lens 21 arranged in between.

## Description

### BACKGROUND OF THE INVENTION

### 1. Field of the Invention

This invention relates to a laser-cutting torch capable of cutting perpendicularly or beveling at a desired angle upon a targeted cut material.

### 2. Description of Related Art

In respect of a conventional cutting method, a laser light emitted from a laser oscillator is guided to a laser-cutting torch via a predetermined light path and thus laser is irradiated to a targeted cut material from a nozzle of the laser-cutting torch and then, the irradiated laser light instantly makes a base material evaporate to form a pierced hole in a thickness direction of the targeted cut material; and then, a gap is formed in a series by moving the laser-cutting torch. Regardless of the material used for the targeted cut material, this cutting method could be used for cutting metal, synthetic resin, wood, ceramic or the like.

In recent times, an output of a laser oscillator has been increased so that a substantially thick steel plate could become a targeted cut material. Although, a portion of a base material where a laser light is irradiated would melt and evaporate when the laser light is irradiated to a steel plate during a cutting of the steel plate, solely moving a nozzle in thus state would cause the melted metal to once again weld to the base material and prevent thus cutting. Therefore, in means to perform the cutting of the steel plate, a gas-oxygen serving as an assisting gas is sprayed from the nozzle simultaneously with the irradiation of the laser light for burning the base material and forcibly removing the melted metal.

The laser-cutting torch is structured with a cylindrical body attached to a light path of the laser light; a lens formed inside the cylindrical body; and a nozzle attached to a tip portion of the cylindrical body and connected to an assisting gas supplying apparatus. Further, in means to perform the cutting, the laser-cutting torch has a structure wherein the laser light is gathered to a lens via the light path for being irradiated from the nozzle upon the targeted cut material, and a focus is predetermined at a prescribed position in a thickness direction of the targeted cut material for concentrating energy.

As a secondary process following a cutting process, a relatively thick steel plate is often subject to welding, and in thus case, beveling is commonly performed at a desired angle upon an edge portion of the cutting shape. Among the many types of laser-cutting torches for beveling, there is a laser-cutting torch with a torch body having a crank-shaped structure. This crank-shaped laser-cutting torch is formed with a primary optical axis connected and arranged perpendicularly to the light path; a secondary optical axis is arranged horizontally and is structured in a pivotally movable manner against the primary optical axis; a third optical axis formed in a right angle against the secondary optical axis; a fourth optical axis arranged parallel to the secondary optical axis and formed in a right angle against the third optical axis; and a fifth optical axis having a nozzle at a tip and structured in a pivotally movable manner against the fourth optical axis, wherein a reflection mirror is arranged at a intersecting point of the respective optical axes.

In respect of a laser-cutting torch with a crank-shaped structure, there is a type where a lens serves as a path for the primary optical axis and is arranged upstream of the laser light receiving reflection mirror (publicly known example 1) and also, there is a type where a lens is arranged at the fifth optical axis with the nozzle in a manner facing the nozzle (publicly known example 2).

Although the publicly known example 1 has an advantage in reducing a size of the laser-cutting torch, a lens of the publicly known example would be limited to a lens of a long focus distance and using a lens of a short focus distance would be unsuitable.

Meanwhile, a laser light gathered by the lens irradiates straight ahead from the nozzle without being reflected by the reflection mirror since the publicly known example 2 has a structure where the lens is arranged at the fifth optical axis with the nozzle in a manner facing the nozzle; accordingly, thus structure requires the fifth optical axis to be formed in a long manner. Therefore, although thus publicly known example 2 would not be a problem when using a lens of a short focus distance, thus publicly known example 2 requires the fifth optical axis to be formed in a long manner in correspondence with a lengthening a focus distance; consequently, the entire the laser-cutting torch is required to become large and the apparatus equipped with thus laser-cutting torch is also required to become large as well.

It is an object of this invention to provide a laser-cutting torch capable of reducing a size as much as possible to make operation easier regardless of using lenses having different focus distance.

### SUMMARY OF THE INVENTION

This invention for solving the foregoing problems relates to a laser-cutting torch comprising: a plurality of joints structured revolvable around a vertical axis as a center with respect to a targeted cut material and pivotally movable around respective horizontal axes and disposed extending in a direction perpendicular to the vertical axis; a primary reflection mirror for receiving laser light emitted from a laser oscillator; a plurality of reflection mirrors disposed in correspondence to the joints; a secondary reflection mirror arranged in a manner facing a nozzle, wherein the laser-cutting torch is structured to set an angle of the nozzle, and to set an arrangement of an intersecting point between the vertical axis and the targeted cut material in which the vertical axis is perpendicular to an optical axis of a laser light irradiated from the nozzle, or to set a position displaced of a prescribed length from the intersecting portion during the pivotal movement of the joints, wherein a lens is arranged between the primary reflection mirror receiving the laser light emitted from the laser oscillator and coming through a prescribed path and the secondary reflection mirror disposed in a manner facing the nozzle.

With the aforementioned laser-cutting torch (hereinafter referred as simply "torch"), when using a lens of a long focus distance, a lens could be arranged close to a primary reflection mirror and when using a lens of a short focus distance, a lens could be arranged close to a secondary reflection mirror since the lens is disposed between a secondary reflection mirror and a light receiving primary reflection mirror as well as a nozzle in order for the secondary reflection mirror to reflect a gathered laser light in a direction of the nozzle; accordingly, a size reduction of the entire torch could be achieved without a lengthening of the torch and thus, a wider variety of lenses could be selectable.

It is desirable for the torch to be comprised of a torch elevation apparatus capable of elevating and lowering a laser-cutting torch in correspondence with an inclination of the nozzle. With thus structure, lowering the torch in correspondence with an elevation of the nozzle caused during an altering of an angle of the torch enables a constant control of elevation where a tip of the nozzle or an intersecting point between a optical axis of the nozzle and a targeted cut material serves as a standard position.

### BRIEF DESCRIPTION OF THE DRAWINGS

The above and other objects and features of the invention are apparent to those skilled in the art from the following preferred embodiments thereof when considered in conjunction with the accompanied drawings, in which:
FIG.1 is a cross-sectional view explaining a structure of a torch according to this embodiment;
FIG.2 is an exterior side view of a torch;
FIG.3 is a side view of a torch explaining an arrangement of a lens;
FIG.4 is an explanatory view showing an inclined state of a nozzle; and
FIG.5 is an explanatory view showing an example of a laser cutting apparatus having a torch in accordance with this embodiment.

### DESCRIPTION OF THE PREFERRED EMBODIMENTS

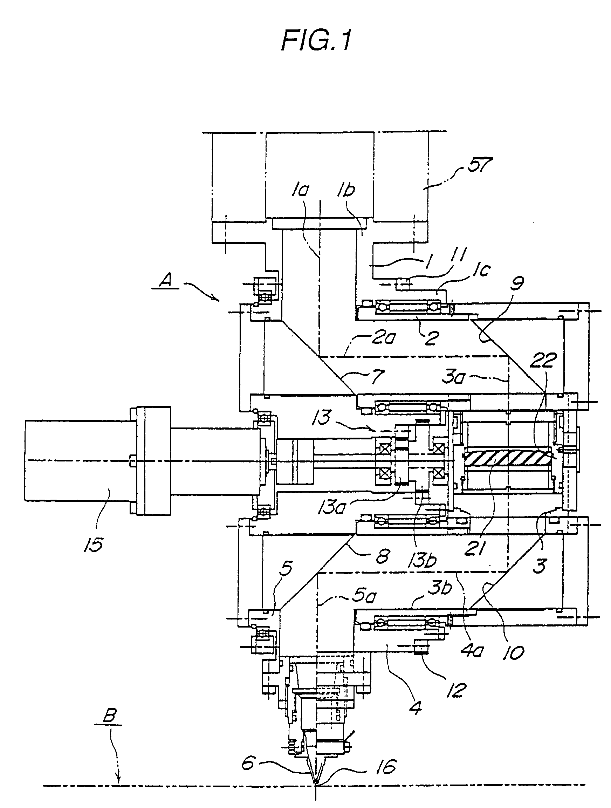

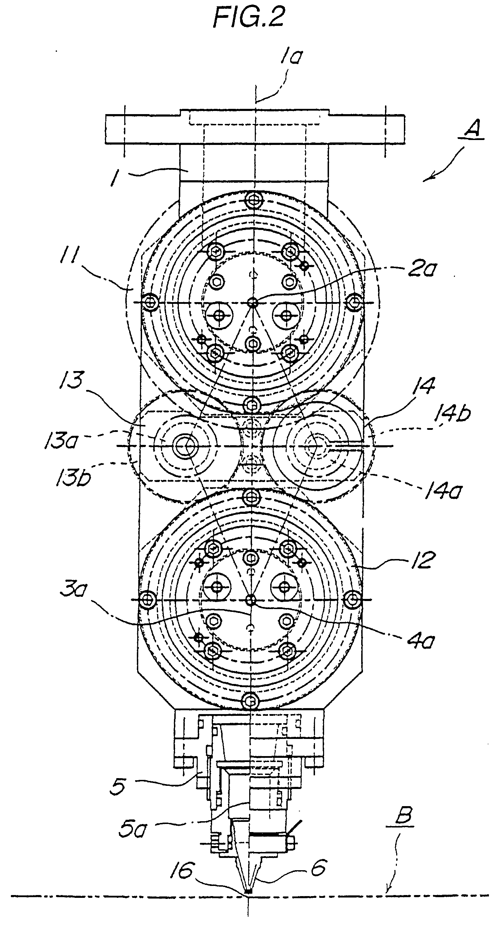

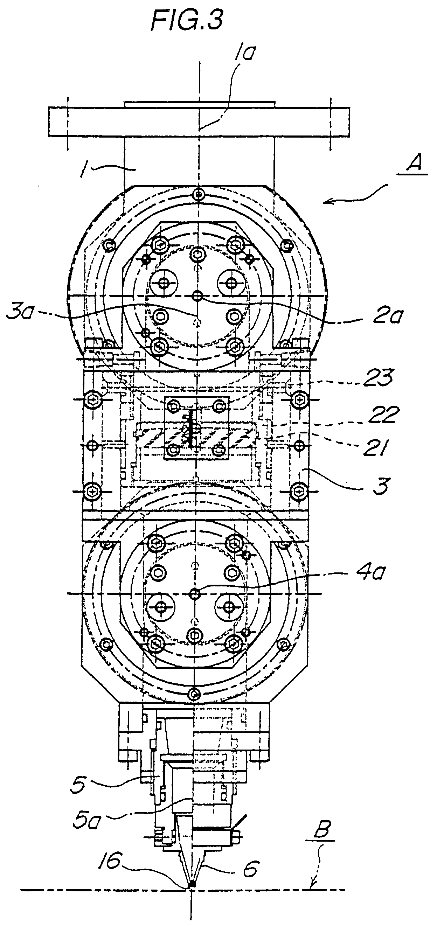

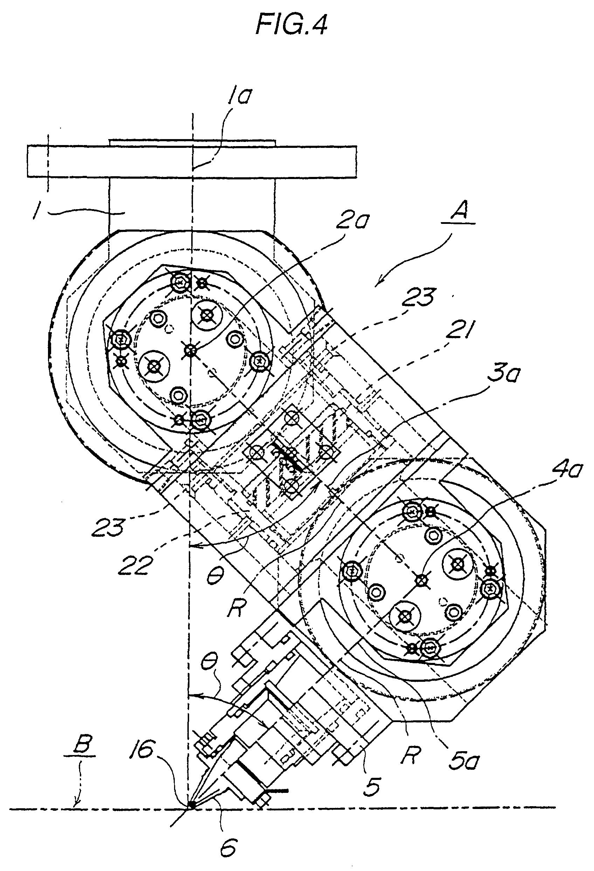

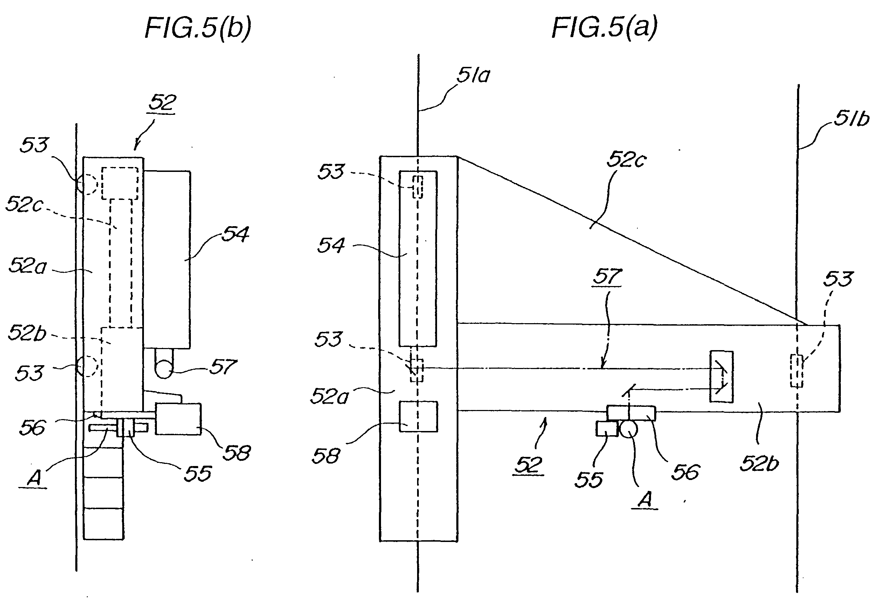

An embodiment of the torch regarding this invention will hereinafter be described with reference to the drawings. FIG.1 is a cross-sectional view explaining a structure of a torch according to this embodiment. FIG.2 is an exterior side view of a torch. FIG.3 is a side view of a torch explaining an arrangement of a lens. FIG.4 is an explanatory view showing an inclined state of a nozzle. FIG.5 is an explanatory view showing an example of a laser cutting apparatus having a torch in accordance with this embodiment.

The torch regarding this invention is structured to perform perpendicular cutting and also beveling, and thus, a laser light is gathered to a lens arranged between the primary and secondary reflection mirrors when the laser light emitted from a laser oscillator is bent into a shape of a crank by a plurality of reflection mirrors including the primary and secondary reflection mirrors and is irradiated from a nozzle to a targeted cut material for corresponding to lenses having different focus distances and for consequentially enabling a reduction of size regardless of the focus distance of the lens.

Before explaining torch A, a representative example of a laser cutting apparatus having the torch A for cutting a targeted cut material into a shape including straight lines or curved lines shall hereinafter be described with reference to FIG.5. In the drawing, a pair of rails 51a, 51b is laid in a parallel manner for enabling the laser cutting apparatus to run on thus rails 51a, 51b.

The laser cutting apparatus includes a base 52 including: a truck 52a arranged on the rail 51a; a garter 52b with one edge portion connected to the truck 52a and the other edge portion reaching on to the rail 51b; and a rigid material 52c serving to increase rigidity by connecting the truck 52a and the garter 52b. The truck 52a solely bears a sufficient rigidity and has an opened frame at the bottom surface; and attached to thus opened frame are two wheels 53 and a driving motor (not shown). In a same manner, the wheels 53 are attached to an edge portion of garter 52b.

A laser oscillator 54 is placed on a top portion of the truck 52a; a torch A is loaded to the garter 52b; and a carriage 56 mounting an elevation apparatus 55 for moving up and down the torch A and a revolving apparatus for revolving the torch A is arranged to move along the garter 52b. Further, a laser light path 57 connecting the laser oscillator 54 and the torch A is formed. Numeral 58 is a control board having a numerical control (NC) unit built inside.

When information (e.g., information regarding a targeted cutting shape, beveling angle, thickness or material of the targeted cut material, cutting speed in correspondence with the beveling angle) is memorized into the NC unit built in the control board 58 and when the operation of the foregoing laser cutting apparatus is started, the torch A inclines at a predetermined bevel angle and in association, a distance of height between the nozzle and the surface of the targeted cut material is determined by operating the elevation apparatus 55 and lowering the torch A, and then, the laser light is emitted from the laser oscillator 54 to the torch A via the light path 57, and then, owing to a plurality of reflection mirrors arranged inside the torch A, an optical axis is bent in correspondence to the inclined angle of the torch A and the laser light is irradiated from the nozzle.

A cutting of the targeted cut material is achieved in a manner where a pierced gap is formed in the targeted cut material by an irradiation of laser light in a thickness direction of the targeted cut material and then, the torch A is moved along a profile of a targeted shape by running a truck 52a in correspondence with the targeted shape while moving the carriage 56.

A structure of the torch A will hereinafter be described with reference to FIG.1 through FIG.4. The torch A is attached to an end portion of a cylindrical body structuring the light path 57 for the laser light. The torch A is comprised of: a primary cylindrical body 1 attached to the cylindrical body structuring the light path 57 in which the primary cylindrical body 1 has a primary optical axis 1a vertical to a targeted cut material B; a secondary cylindrical body 2 arranged in a horizontal and perpendicular intersecting direction against the primary cylindrical body 1 in which the secondary cylindrical body 2 has a secondary optical axis 2a; a third cylindrical body 3 arranged in a perpendicular intersecting direction against the secondary cylindrical body 2 in which the third cylindrical body 3 has a third optical axis 3a; a fourth cylindrical body 4 arranged in a horizontal and perpendicular intersecting direction against the third cylindrical body 3 in which the fourth cylindrical body 4 has a fourth optical axis 4a; a fifth cylindrical body 5 arranged in a perpendicular intersecting direction against the fourth cylindrical body 4 in which the fifth cylindrical body 5 has a fifth optical axis 5a; and a nozzle 6 arranged at a tip of the fifth cylindrical body 5.

A primary reflection mirror 7 for receiving a laser light is arranged at an intersecting point of the primary optical axis 1a and the secondary optical axis 2a; a secondary reflection mirror 8 is arranged at an intersecting point of the fourth optical axis 4a and the fifth optical axis 5a in which the secondary reflection mirror disposed at a position facing the nozzle 6; a third reflection mirror 9 is arranged at an intersecting point of the secondary optical axis 2a and the third optical axis 3a; and a fourth reflection mirror 10 is arranged at an intersecting point of the third optical axis 3a and the fourth optical axis 4a.

Thus structured, the secondary cylindrical body 2 and the third cylindrical body 3 forms a united body and a horizontal portion 3b parallel to the secondary cylindrical body 2 projects from the third cylindrical body 3 so that the secondary cylindrical body 2 continuing through to the horizontal portion 3b would form into a shape similar to a square closed bracket "]"; and thus, a pivotally movable structure is formed having the secondary optical axis 2a of the secondary cylindrical body 2 serving as a center. In other words, a perpendicular portion 1b where the primary cylindrical body 1 is connected to the light path 57 and a horizontal portion 1c (sharing the optical axis 2a) vertical to the perpendicular portion 1b so as to form a shape of a letter *L*; and thus, the secondary cylindrical body 2 engages to a horizontal portion 1c in a pivotally movable structure enabling a forming of a pivotally movable structure having the secondary optical axis 2a as a center.

In a same manner, the fourth cylindrical body 4 and the fifth cylindrical body 5 forms a united body so as to form a shape of a letter *L*; and thus, the fourth cylindrical body 2 engages to a horizontal portion 3b of the third cylindrical body 3 in a pivotally movable structure enabling a forming of a pivotally movable structure having the fourth optical axis 4a as a center. Accordingly, the torch A is structured to become pivotally movable having the secondary cylindrical body 2 and the fourth cylindrical body 4 to serve as a joint.

The secondary optical axis 2a of the secondary cylindrical body 2 and the fourth optical axis 4a of the fourth cylindrical body 4 comprising the torch A are initially predetermined in a direction parallel to a lain direction of the rails 51a, 51b; a revolving apparatus arranged at the carriage 56 in accordance with a cutting line of a targeted shape would enable the respective optical axes 2a, 4a to be driven and revolve in a manner constantly matching with tangential line of the cutting lines.

A structure for the pivotal moving the secondary cylindrical body 2 and the fourth cylindrical body 4 shall hereinafter be described with reference to FIG.1 and FIG.2. Gears 11, 12 are fixed to the horizontal portion 1c of the primary cylindrical body 1 and the fourth cylindrical body 4 respectively; a pair of gears 13,14 is formed of gears 13a, 13b and gears 14a, 14b having different numbers of teeth for engaging to the gears 11, 12 (the gears 13a and 14a have the same number of teeth, and also the gears 13b and 14b have the same number of teeth) in which the gears 13a, 13b and the gears 14a, 14b forms a united body; and thus, one gear from the pair of gears (e.g. gear 13) is structured so that the gear could be driven and rotated by a motor 15.

Accordingly, the gear 13 would rotate when the motor 15 is driven. Since the gear 11 is fixed to the primary cylindrical body 1, the gear 13a engaged to the gear 11 rotates a surrounding of the gear 11 and simultaneously, the gear 13b rotates the gear 12 (fourth cylindrical body 4). In other words, the secondary cylindrical body 2 could pivotally move without having to change position in a height direction; subsequently, the third cylindrical body 3 would incline while moving upwards and at the same time, in correspondence with the inclination of the third cylindrical body 3, the fourth cylindrical body 4 would pivotally move while moving upwards to make the fifth cylindrical body 5 become inclined.

In thus state, a pivotal rotating angle of the secondary cylindrical body 2 and the fourth cylindrical body 4 is predetermined by a gear ratio of the gears 11 through 14. In this embodiment, the foregoing gear ratio is predetermined so that the pivotal moving angle of the fourth cylindrical body 4 would always be two times as that of the pivotal moving angle of the secondary cylindrical body 2.

Therefore, as shown in FIG.4, the fourth cylindrical body 4 rotates 90 degrees when the secondary cylindrical body 2 rotates 45 degrees; subsequently, the fifth cylindrical body 5 inclines 45 degrees against a prolonged line of the primary optical axis 1a in which the primary optical axis 1a is arranged vertical to the targeted cut material B. In particular, a triangle having the secondary optical axis 2a, the fourth optical axis 4a, and a point 16 as the vertex would have a shape of an isosceles triangle when the torch A is viewed from a direction perpendicularly intersecting with the optical axis 2a and 4a by equally forming: the distance between the secondary optical axis 2a and the fourth optical axis 4a; the distance between the fourth optical axis 4a and the tip of the nozzle 6; or the distance between the tip of the nozzle 6 and the point 16 arranged with a prescribed length, respectively. Accordingly, the inclination angle of the fifth cylindrical body 5 could match with the bevel angle by predetermining the pivotal movement angle of the secondary cylindrical body 2 to an objective beveling angle.

The distance between the secondary optical axis 2a and the point 16 would be 2 × R × cos *θ* when the inclination angle of the secondary cylindrical body 2 (inclination angle of the fifth cylindrical body 5) is *θ* and the distance between the secondary cylindrical body 2 and the fourth cylindrical body 4 is R; subsequently, the subtracted length between thus measurement and 2 × R could be shortened. Accordingly, the position of the point 16 would elevate in correspondence with the pivotal movement of the secondary cylindrical body 2 and the fourth cylindrical body 4 when a height position of the secondary optical axis 2a is not changed.

Therefore, during an inclining of the torch A, the fifth cylindrical body 5 would be inclined having the point 16 as a standard position by driving the torch elevation apparatus 55 arranged at the carriage 56 in correspondence with a driving of the motor 15 and by lowering the torch A down to 2 • R (1- cos *θ*). In other words, the bevel angle could be predetermined without having to change the position of the cutting line of the surface of the targeted cut material B.

A lens 21 is arranged between the secondary reflection mirror 8 and the primary reflection mirror 7 for receiving a laser light for the torch A wherein the primary reflection mirror 7 is arranged at an intersecting point between the primary optical axis 1a of the primary cylindrical body 1 and the secondary optical axis 2a of the secondary cylindrical body 2a and wherein the secondary reflection mirror 8 is arranged facing the nozzle 6 at an intersecting point between the fourth optical axis 4a of the fourth cylindrical body 4 and the fifth optical axis 5a of the fifth cylindrical body 5.

Especially in this embodiment, the lens 21 is detachably attached to the third cylindrical body 3 wherein the lens is arranged between the third reflection mirror 9 and the fourth reflection mirror 10 in which the third reflection mirror 9 is disposed at the intersecting point of the secondary optical axis 2a and the third optical axis 3a while the fourth reflection mirror 10 is disposed at the intersecting point of the third optical axis 3a and the fourth optical axis 4a.

The lens 21 is fixed to a cylindrical holder 22 and is attached to the third cylindrical body 3 with a screw 23 after the holder 22 is inserted and adjusted into the third cylindrical body 3.

Although a focus distance of the lens 21 is not to be restricted, the distance is required to be substantially equal to or greater than the sum of the length of the fourth optical axis 4a and the fifth optical axis 5a and the length between the lens 21 of the third optical axis 3a and the fourth reflection mirror 10.

Accordingly, a lens having a substantially long focus distance could be used as the lens 21, and thus, the lens 21 would be effective when the targeted cut material B has a measurement from 9mm to 16mm or a thick board greater than thus measurement in which a length of a cutting surface during beveling is seemingly equal to that of the thick board.

Consequently, the fourth cylindrical body 4, the fifth cylindrical body 5, the nozzle 6 could be respectively disposed downstream of the irradiating direction of the laser light of the lens 21 by arranging the lens 21 at the third cylindrical body 3.

Although the embodiment explained above is of a structure having the lens 21 arranged between the primary reflection mirror 7 and the secondary reflection mirror 8 in which the lens 21 is arranged at the third optical axis 3a disposed between the third and fourth reflection mirrors 9, 10 in-between the aforementioned reflection mirrors 7 and 8, the lens 21 could be arranged in accordance with the focus distance and shall not be limited to that of the embodiment. For example, the lens 21 could be arranged between the primary reflection mirror 7 and the third reflection mirror 9 at the secondary optical axis 2a when a focus distance of the lens 21 is long; further, the lens 21 could be arranged between the fourth reflection mirror 10 and the secondary reflection mirror 8 at the fourth optical axis 4a when a focus distance of the lens 21 is short.

As explained above, with the laser-cutting torch regarding this invention, supposing that the letter *L* is a focus distance of the lens, a length for reaching the secondary reflection mirror and a length from the secondary reflection mirror to the nozzle or the length from the nozzle to a point distanced outside could be included within a limit of *L*, since the lens is arranged between the laser light receiving primary reflection mirror and the secondary reflection mirror arranged facing the nozzle for bending the laser light to a direction of the nozzle. Accordingly, a wider variety of lenses could be selectable by closely arranging a lens to the primary reflection mirror when using the lens of a long focus distance, and by closely arranging a lens to the secondary reflection mirror when using the lens of a short focus distance.

Therefore, a size reduction of the entire laser-cutting torch is possible, and subsequently, a revolving radius could be reduced when revolving the laser-cutting torch during a cutting process of a curved line and also operation becomes easier in terms of program.

The foregoing description of preferred embodiments of the invention has been presented for purposes of illustration and description, and is not intended to be exhaustive or to limit the invention to the precise form disclosed. The description was selected to best explain the principles of the invention and their practical application to enable others skilled in the art to best utilize the invention in various embodiments and various modifications as are suited to the particular use contemplated. It is intended that the scope of the invention should not be limited by the specification, but should be defined by claims set forth below.

## Claims

1. A laser-cutting torch comprising:
a plurality of joints structured revolvable around a vertical axis as a center with respect to a targeted cut material and pivotally movable around respective horizontal axes and disposed extending in a direction perpendicular to the vertical axis;
a primary reflection mirror for receiving laser light emitted from a laser oscillator;
a plurality of reflection mirrors disposed in correspondence to the joints;
a secondary reflection mirror arranged in a manner facing a nozzle,
wherein the laser-cutting torch is structured to set an angle of the nozzle, and to set an arrangement of an intersecting point between the vertical axis and the targeted cut material in which the vertical axis is perpendicular to an optical axis of a laser light irradiated from the nozzle, or to set a position displaced of a prescribed length from the intersecting portion during the pivotal movement of the joints,
wherein a lens is arranged between the primary reflection mirror receiving the laser light emitted from the laser oscillator and coming through a prescribed path and the secondary reflection mirror disposed in a manner facing the nozzle.

2. The laser-cutting torch in accordance to claim 1, wherein the laser-cutting torch is comprised of a torch elevation apparatus for elevating and lowering the laser-cutting torch in correspondence with an inclination of the nozzle.
